# EUROPEAN PATENT APPLICATION

(11) **EP 4 654 561 A1**
(43) Date of publication of application: **26.11.2025**
(21) Application number: 24749513.8
(22) Date of filing: 10.01.2024
(51) Int. Cl.: H04L 67/63

(54) **DIGITAL HUMAN COMMUNICATION METHOD AND APPARATUS**

(30) Priority: 31.01.2023 CN 202310097790
(71) Applicant: Huawei Technologies Co., Ltd., Shenzhen, Guangdong 518129 (CN)
(72) Inventor: ZHU, Yongping, Shenzhen, Guangdong 518129 (CN); LIN, Lin, Shenzhen, Guangdong 518129 (CN); SUN, Zhao, Shenzhen, Guangdong 518129 (CN); JIA, Jianguang, Shenzhen, Guangdong 518129 (CN); WU, Hao, Shenzhen, Guangdong 518129 (CN); WU, Liang, Shenzhen, Guangdong 518129 (CN)
(74) Representative: Isarpatent
(86) International application number: PCT/CN2024/071662
(87) International publication number: WO 2024/160031

(57) **Abstract**

This application provides a digital human communication method and apparatus, and relates to the field of communication technologies. In the method, in a process in which a media server drives a digital human model based on video data captured by a first terminal device, if a communication connection to the first terminal device is abnormal, the media server switches to drive, by using an audio stream captured by the first terminal device, the digital human model to generate a video stream to be sent to a second terminal device. This ensures smoothness of display of the second terminal device, and avoids a problem like frame freezing or deformation of a display image.

## Description

### CROSS-REFERENCE TO RELATED APPLICATIONS

This application claims priority to Chinese Patent Application No. 202310097790.9, filed with the China National Intellectual Property Administration on January 31, 2023 and entitled "DIGITAL HUMAN COMMUNICATION METHOD AND APPARATUS", which is incorporated herein by reference in its entirety.

### TECHNICAL FIELD

This application relates to the field of communication technologies, and in particular, to a digital human communication method and apparatus.

### BACKGROUND

A digital human in this application is a virtual digital human, is a virtual character image with a digital appearance, and is displayed via a display device. A digital human technology mainly includes digital human model making and storage, model driving and rendering performed after action capture and collection, and the like. Model driving is further classified into audio driving and video driving. Audio driving is to drive an expression and a lip of a digital human model by using captured speech, and video driving is to drive a body and a facial expression of a digital human through captured video features, for example, captured data such as a location change of a key point.

With development and popularization of media technologies, socialization is becoming a mainstream in scenarios such as entertainment and communication, and a realistic digital human imaging technology is becoming a trend. In this way, to enable digital human display to more really follow and capture an expression and an action of a human, in most current digital human communication, a server on a network side performs video driving and rendering based on video data captured by a capturing end, and sends a rendered image to a receive end for display. This digital human communication technology has the following disadvantages: Because the video data is large, and the video data is transmitted between the capturing end and the server in a wireless communication manner, there is a problem of channel instability, for example, air interface jitter, signal interference, and insufficient bandwidth. As a result, effect of driving a digital human by using a video by the server is poor, affecting a display image of the receive end.

### SUMMARY

This application provides a digital human communication method and apparatus, to resolve a problem that frame freezing and deformation occur in a display image on a display end due to poor communication quality in a digital human communication scenario.

According to a first aspect, a digital human communication method is this application provided. The method is performed by a media server. The method includes: receiving first video data and a first audio stream from a first terminal device, where the first video data is generated by the first terminal device by capturing an expression and an action of a user of the first terminal device, and the first audio stream is generated by the first terminal device by capturing a voice of the user; sending a first video stream and the first audio stream to a second terminal device, where the first video stream is generated by driving a digital human model based on the first video data; when a communication connection to the first terminal device is abnormal, switching from driving the digital human model by using the first video data to driving the digital human model by using the first audio stream; and sending a second video stream and the first audio stream to the second terminal device, where the second video stream is generated by driving the digital human model based on the first audio stream.

Based on the foregoing solution, this application proposes that in a digital human communication process, when a communication connection between a network side and a capturing end is normal, the network side performs video driving on the digital human model by using video data captured by the capturing end. In this way, it is ensured that an expression and an action of the digital human image displayed on a display end can completely follow an actual expression movement of the human. Compared with audio driving, video driving can improve viewing experience of the user. When network quality between the network side and the capturing end deteriorates and video data transmission is blocked, the network side may switch from video driving to audio driving in time, to ensure smooth display on the display end and avoid a problem like frame freezing or deformation.

In some embodiments, the following manner is used to determine that the communication connection to the first terminal device is abnormal: determining that a frame loss occurs in the first video data; or determining that a receiving rate of a plurality of image frames carrying the first video data is less than a speed threshold.

Based on the foregoing solution, statistics about a status of data transmission in a process of real-time communication with the first terminal device are captured, so that whether a communication connection to the first terminal device is abnormal can be determined in time, and a driving mode of the digital human model can also be switched in time.

In some embodiments, the method further includes: when the communication connection to the first terminal device is abnormal, receiving a switching indication sent by the first terminal device, where the switching indication indicates the media server to switch from driving the digital human model by using the first video data to driving the digital human model by using the first audio stream.

Based on the foregoing solution, this application proposes that the first terminal device may further detect whether the communication connection is abnormal, and notify the media server when the first terminal device determines that the communication connection is abnormal. In this way, the media server does not need to monitor whether the communication connection is abnormal, and may directly switch the driving mode based on the notification of the first terminal device, thereby saving computing resources of the media server.

In some embodiments, the switching indication is carried in a first video data packet, and the first video data packet is a last video data packet in a plurality of video data packets for carrying the first video data; or the switching indication is carried in a first audio data packet, and the first audio data packet is an audio data packet sent by the first terminal device when the first terminal device determines that the communication connection is abnormal; or the switching indication is carried in indication signaling sent by the first terminal device.

Based on the foregoing solution, the switching indication from the first terminal device may be separate signaling, or may be carried in a data packet transmitted by the first terminal device. The media server can obtain the switching indication in the data packet more quickly, so that the drive mode can be switched in time.

In some embodiments, the method further includes: receiving a first request from the first terminal device, where the first request is used to request to establish the communication connection; and sending a first response to the first terminal device, where the first response carries a switching capability identifier, the switching capability identifier indicates that the media server supports switching from a first driving mode to a second driving mode, the first driving mode is driving the digital human model by using video data, and the second driving mode is driving the digital human model by using an audio stream.

Based on the foregoing solution, when a digital human communication connection is established, the first terminal device is notified of whether the media server supports switching of a driving mode, to prevent a problem that switching cannot be performed in a digital human communication process.

In some embodiments, a background part of a plurality of frames of images included in the second video stream is a background part of a last frame of image included in the first video stream; or a background part of a plurality of frames of images included in the second video stream is a preset background; or a plurality of frames of images included in the second video do not include a background part.

Based on the foregoing solution, the background part of the last frame of image generated by video driving is used as a background part of a video frame generated by audio driving, thereby improving authenticity of an image generated by audio driving.

In some embodiments, when the communication connection to the first terminal device is normal, the digital human model is switched from being driven by using the first audio stream to being driven by using second video data. The second video data is from the first terminal device, and the second video data is generated by the first terminal device by capturing an expression and an action of the user. A third video stream and the first audio stream are sent to the second terminal device. The third video stream is generated by driving the digital human model based on the second video data.

Based on the foregoing solution, when the communication connection is normally restored, the media server switches from audio driving to video driving in time, to improve display effect.

In some embodiments, the media server is located in an IP multimedia subsystem IMS; or the media server is located in an over the top OTT system.

According to a second aspect, this application provides another digital human communication method. The method is performed by a first terminal device. The method includes: sending first video data and a first audio stream to a media server, where the first video data is generated by capturing an expression and an action of a user of the first terminal device, the first audio stream is generated by capturing a voice of the user, and the first video data is used by the media server to drive a digital human model to obtain a first video stream for communicating with a second terminal device; and when a communication connection to the media server is abnormal, or video interference exists in any frame of image included in the first video data, stopping sending the first video data to the media server, where when the first video data is not sent, the first audio stream is used by the media server to drive the digital human model to obtain a second video stream for communicating with the second terminal device. The video interference represents that a quantity of profile pictures included in the any frame of image is not unique.

In some embodiments, the method further includes: when it is determined that the communication connection to the media server is abnormal, or it is determined that the video interference exists in the any frame of image, sending a switching indication to the media server, where the switching indication indicates the media server to switch from driving the digital human model by using the first video data to driving the digital human model by using the first audio stream.

In some embodiments, the determining that a communication connection to the media server is abnormal includes: determining that a sending rate of a plurality of video data packets for carrying the first video data is less than an encoding bit rate of the first video data, and a difference between the encoding bit rate and the sending rate is greater than a specified threshold; or determining that a packet loss rate of a plurality of video data packets for carrying the first video data is greater than a packet loss rate threshold.

In some embodiments, the switching indication is an indication parameter included in a packet header of a first video data packet; or the switching indication is an indication parameter included in a packet header of a first audio data packet; or the switching indication is information carried in indication signaling sent by the first terminal device. The first video data packet is a last video data packet in the plurality of video data packets for carrying the first video data, and the first audio data packet is an audio data packet sent when it is determined that the communication connection is abnormal or it is determined that the video interference exists in the any frame of image.

In some embodiments, the method further includes: sending a first request to the media server, where the first request is used to request to establish the communication connection; and receiving a first response sent by the media server, where the first response carries a switching capability identifier, the switching capability identifier indicates that the media server supports switching from a first driving mode to a second driving mode, the first driving mode is driving the digital human model by using video data, and the second driving mode is driving the digital human model by using an audio stream.

In some embodiments, a background part of a plurality of frames of images included in the second video stream is a background part of a last frame of image included in the first video stream; or a background part of a plurality of frames of images included in the second video stream is a preset background; or a plurality of frames of images included in the second video do not include a background part.

In some embodiments, the method further includes: when the communication connection to the media server is normal, and no video interference exists in any frame of image included in the second video data generated by capturing an expression and an action of the user, sending the second video data and the first audio stream to the media server. The second video data is used by the media server to drive the digital human model to obtain a third video stream for communicating with the second terminal device.

According to a third aspect, this application provides a digital human communication apparatus. The apparatus is a media server, or the apparatus may be used in a component in the media server, for example, a chip or a circuit. The apparatus includes a communication unit and a processing unit.

The communication unit is configured to receive first video data and a first audio stream from a first terminal device, where the first video data is generated by the first terminal device by capturing an expression and an action of a user of the first terminal device, and the first audio stream is generated by the first terminal device by capturing a voice of the user. The communication unit is further configured to send a first video stream and the first audio stream to a second terminal device, where the first video stream is generated by driving a digital human model based on the first video data. When a communication connection to the first terminal device is abnormal, the processing unit is configured to switch from driving the digital human model by using the first video data to driving the digital human model by using the first audio stream, to obtain a second video stream. The communication unit is further configured to send the second video stream and the first audio stream to the second terminal device.

According to a fourth aspect, this application provides another digital human communication apparatus. The apparatus is a first terminal device, or the apparatus may be a component used in the first terminal device, for example, a chip or a circuit in the first terminal device. The apparatus includes a communication unit and a processing unit.

The communication unit is configured to send first video data and a first audio stream to a media server, where the first video data is generated by capturing an expression and an action of a user of the first terminal device, the first audio stream is generated by capturing a voice of the user, and the first video data is used by the media server to drive a digital human model to obtain a first video stream for communicating with a second terminal device. The processing unit is configured to: when a communication connection to the media server is abnormal, or video interference exists in any frame of image included in the first video data, indicate the communication unit to stop sending the first video data to the media server. When the first video data is not sent, the first audio stream is used by the media server to drive the digital human model to obtain a second video stream for communicating with the second terminal device. The video interference represents that a quantity of profile pictures included in the any frame of image is not unique.

According to a fifth aspect, an embodiment of this application provides a digital human communication system, including a first terminal device, a media server, and a second terminal device.

The first terminal device is configured to send first video data and a first audio stream to the media server, where the first video data is generated by capturing an expression and an action of a user of the first terminal device, and the first audio stream is generated by capturing a voice of the user. The media server is configured to: receive the first video data and the first audio stream, and send the first video stream and the first audio stream to the second terminal device, where the first video stream is generated by driving a digital human model based on the first video data. The first terminal device is further configured to: when a communication connection to the media server is abnormal, or video interference exists in any frame of image included in the first video data, stop sending the first video data to the media server. The media server is further configured to: when a communication connection to the first terminal device is abnormal, or video interference exists in any frame of image included in the first video data, switch from driving a digital human model by using the first video data to driving a digital human model by using the first audio stream, to obtain a second video stream, and send the second video stream and the first audio stream to the second terminal device. The video interference represents that a quantity of profile pictures included in the any frame of image is not unique.

In some embodiments, the first terminal device is further configured to: when it is determined that the communication connection to the media server is abnormal, or it is determined that the video interference exists in the any frame of image, send a switching indication to the media server, where the switching indication indicates the media server to switch from driving the digital human model by using the first video data to driving the digital human model by using the first audio stream.

In some embodiments, the digital human communication system further includes an application server (application server, AS), and the switching indication is information carried in indication signaling sent by the first terminal device. When the first terminal device sends the switching indication to the media server, the first terminal device is specifically configured to send the indication signaling to the AS. The AS is configured to receive the instruction signaling, and send the instruction signaling to the media server.

According to a sixth aspect, this application provides another digital human communication apparatus, including a processor and a memory. The memory is configured to store a program. The processor is configured to execute the program stored in the memory, to enable the apparatus to implement the method according to any one of the possible designs of the first aspect or the second aspect.

According to a seventh aspect, an embodiment of this application provides a computer-readable storage medium. The computer-readable storage medium stores program code, and when the program code runs on the computer, the computer is enabled to perform the method according to any one of the possible designs of the first aspect or the second aspect.

According to an eighth aspect, an embodiment of this application provides a computer program product. When the computer program product runs on a computer, the computer is enabled to perform the method according to any possible design of the first aspect or the second aspect.

According to a ninth aspect, an embodiment of this application provides a chip system. The chip system includes a processor. The processor is coupled to a memory, and is configured to invoke a computer program or computer instructions stored in the memory, to enable the processor to perform the method according to the possible design of the first aspect or the second aspect.

According to a tenth aspect, an embodiment of this application provides a processor. The processor is configured to invoke a computer program or computer instructions stored in a memory, to enable the processor to perform the method according to the possible design of the first aspect or the second aspect.

Based on the implementations provided in the foregoing aspects, embodiments of this application may be further combined to provide more implementations. For technical effect that can be achieved by any one of the possible designs of the second aspect to the tenth aspect, refer to descriptions of technical effect that can be achieved by any one of the possible designs of the first aspect. Repeated parts are not described.

### BRIEF DESCRIPTION OF DRAWINGS

FIG. 1A is a diagram of an architecture of an application scenario according to an embodiment of this application;
FIG. 1B is a diagram of an architecture of another application scenario according to an embodiment of this application;
FIG. 2 is a diagram of an architecture of another application scenario according to an embodiment of this application;
FIG. 3 is a diagram of an audio-driven digital human communication process;
FIG. 4 is a flowchart of a digital human communication method according to an embodiment of this application;
FIG. 5A shows an example of a packet header that is of an audio data packet and to which no indication parameter is added;
FIG. 5B shows an example of a packet header that is of an audio data packet and to which an indication parameter is added according to an embodiment of this application;
FIG. 6 is a flowchart of another digital human communication method according to an embodiment of this application;
FIG. 7 is a flowchart of another digital human communication method according to an embodiment of this application;
FIG. 8 is a flowchart of another digital human communication method according to an embodiment of this application;
FIG. 9 is a flowchart of a communication connection establishment method according to an embodiment of this application;
FIG. 10 is a flowchart of another communication connection establishment method according to an embodiment of this application;
FIG. 11 is a flowchart of another communication connection establishment method according to an embodiment of this application;
FIG. 12 is a diagram of a structure of a digital human communication apparatus according to an embodiment of this application; and
FIG. 13 is a diagram of a structure of another digital human communication apparatus according to an embodiment of this application.

### DESCRIPTION OF EMBODIMENTS

To facilitate understanding of solutions of this application, concepts and terms used in embodiments of this application are first briefly described.
(1) Rendering: Rendering is a process of converting a model into an image through a computer program. The rendering process is a process of projecting a model in a three-dimensional scene into a digital image in a two-dimensional manner based on a specified environment, light, material, and a rendering parameter.
(2) Video interference: In embodiments of this application, the video interference means that in a digital human video call process, a quantity of profile pictures that appear in an image captured by a camera at a capturing end is greater than 1 or less than 1.
(3) Alpha compositing: The alpha compositing is a process of combining an image with a background. After the combination, visual effect of partial or full transparency can be generated. The alpha compositing is also referred to as alpha blending or transparency compositing. During image rendering, a plurality of sub-elements of a target image may be separately rendered, and finally, a plurality of sub-element images are synthesized into one target image.
(4) IP multimedia subsystem (IP multimedia subsystem, IMS): The IP multimedia subsystem is a network system architecture that provides speech and multimedia services based on an IP network, and includes a plurality of core network function entities that can provide multimedia services.
(5) Over the top (over the top, OTT): OTT means that internet companies develop value-added services such as video, social networking, gaming, and data services based on an open internet, bypassing operators. OTT is different from a communication service provided by a current operator. The OTT uses only a network of the operator, and a service is provided by a third party other than the operator. Currently, a typical OTT service includes an internet television service.
(6) Digital human: The digital human is a virtual character image with a digital appearance, and is displayed via a display device. For example, display effect may be presented via a device like a mobile phone, a television, or glasses with an augmented reality (augmented reality, AR) technology or a virtual reality (virtual reality, VR) technology. The digital human has a similar or quasi-real appearance to a human, and has human-like features such as an intuitive appearance, a gender, and a personality. Digital humans are driven by digital technologies, and can have human-like behavior, including expression capabilities such as speech, an expression, and an action. Digital humans can even use artificial intelligence to have simple ideas, identify external environments, and communicate with people. Digital humans are widely used in scenarios such as film and television production, virtual streamers, virtual teaching, gaming and entertainment, virtual customer service, virtual tour guides, and real-time communication.

With development of information technologies, digital humans have gradually evolved from cartoon images to refined models that include massive rendering data and that have realistic human appearances. In the beginning, digital humans can only simply control the body, but now computers can be used to accurately control each joint to perform natural actions similar to human actions. In general, the virtual digital human technology is developing towards intelligence, convenience, refinement, and diversification. The digital human technology mainly includes several technical phases: making and storing a digital human model (modeling), driving and reconstructing a model after a capturing end captures an action (driving), and presenting an image based on an angle of an observer (rendering). Currently, a modeling technology phase is mainly offline production. Surface information of a modeled object is captured by using technologies such as camera shooting, structured light scanning, and light field reconstruction in a dynamic scenario, and a digital human model is generated based on the captured surface information. In a drive reconstruction technology phase, key parts of the digital human model, such as a torso, a joint, and an expression, are abstracted into an information model, that is, a captured real human expression and an action is mapped to the digital human model, to generate a movement expression of the digital human model. In a rendering technology phase, a virtual and real overlay scenario is constructed based on a parameter such as an angle of an observer, and a driven digital human model is rendered into an image frame by frame for display.

For different application scenarios, specific implementations of the foregoing three digital human technical phases (modeling, driving, and rendering) are different. For example, in a scenario such as a virtual streamer, virtual teaching, or a virtual tour guide, an image, a driving procedure, and a rendering angle of the digital human model are all orchestrated in advance, and are displayed based on specified scenario logic or an interaction instruction, to implement digital human image display and simple interaction. In these scenarios, implementation of the digital human communication technology does not consume excessive device computing power, and the digital human communication technology is easy to implement. However, with development and popularization of media technologies, socialization is becoming a mainstream of large-scale media scenarios such as entertainment and communication, and limited pre-arranged scenarios are not suitable for large-scale online real-time interaction. In this way, a specific implementation process of the digital human technology in the real-time communication scenario is different from an implementation process in the foregoing scenario, for example, the virtual streamer. In a real-time communication scenario, an image of a digital human model may be set based on a requirement of a service scenario. For example, different digital human models may be used for different communication scenarios, or a facial beautification image of a portrait captured by a capturing end may be used. For a rendering process, the terminal device may negotiate with a network side when the terminal device establishes a communication connection, to determine whether the rendering process is implemented by the network side or the terminal device side. For a driving process, because computing power consumed in the driving process is large, and the terminal device is limited by a plurality of factors such as a hardware resource, a volume, a weight, power consumption, and heat dissipation, a requirement of the driving computing power cannot be met. Consequently, effect of the driving process implemented by the terminal device is not ideal. Therefore, in a related technology, a server deployed on the network side is proposed to implement a digital human driving process. The digital human driving process is classified into audio driving and video driving. The following describes the two driving modes.
(1) Audio driving: A server deployed on a network side obtains a speech captured by a capturing end, performs speech recognition by using an automatic speech recognition (automatic speech recognition, ASR) technology, and inputs a recognized speech text into a pre-trained model (for example, a pre-trained artificial intelligence (artificial intelligence, AI) model), to obtain a lip shape or expression coefficient. The obtained coefficient is set for the digital human model, to generate an expression of the digital human model. In some scenarios, different speaking speeds or intonations may be further preset to correspond to different body movements of the digital human model, and a corresponding body movement is determined based on the obtained speech, to obtain an expression and an action of the digital human.
(2) Video driving: A server deployed on a network side obtains a video captured by a capturing end, extracts a video feature according to a video feature extraction algorithm (for example, a key point detection algorithm), and inputs the extracted video feature into a pre-trained model to obtain a driving coefficient of a body or an expression, or may obtain a driving coefficient of a body or an expression through a 3D deformable model (3D morphable model, 3DMM). Further, the driving coefficient may be set for the digital human model to generate a facial expression and a body movement of the digital human model.

After the digital human model is driven by using the video driving technology or the audio driving technology, the server deployed on the network side may further render the driven digital human model into a two-dimensional image (for example, rendering may be performed through a rendering engine like Unity or UE), and transmit the obtained image to a display end for display.

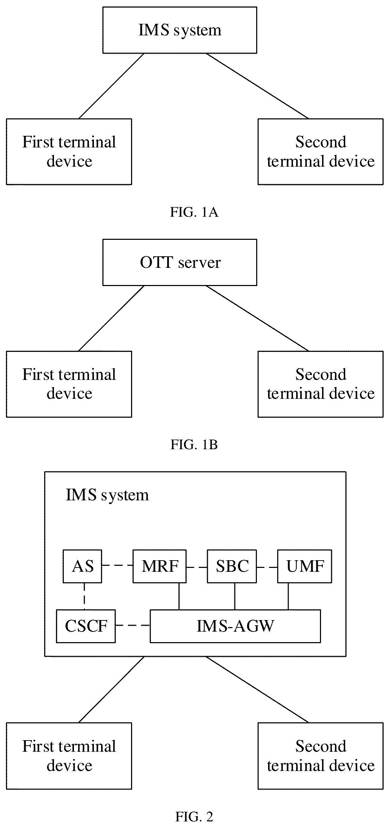

With reference to the digital human technology described above, the following describes an application scenario related to the digital human communication solution provided in this application. FIG. 1A is a diagram of an architecture of an application scenario according to an embodiment of this application. The scenario shown in FIG. 1A includes a first terminal device, an IMS system, and a second terminal device. The first terminal device is configured to: capture an expression and an action of a user of the first terminal device in real time, encode and package a captured video according to a specified video transmission protocol (for example, a real-time transport protocol (real-time transport protocol, RTP)), and upload the video to the IMS system. Optionally, the first terminal device may upload the video to the IMS system by using a stream pushing software development kit (software development kit, SDK). The first terminal device is further configured to: capture a voice of the user of the first terminal device in real time, and upload a captured audio stream to the IMS system. The IMS system is configured to: drive a digital human model by using the video driving technology or the audio driving technology described above, render the driven digital human model into a two-dimensional image, and send the image to the second terminal device. The second terminal device is configured to display the received image. In some embodiments, a rendering process may be implemented by the IMS system, or may be implemented by the second terminal device. This is not limited in this application. For example, when the rendering process is implemented by the second terminal device, the IMS system may send the driven digital human model to the second terminal device, and the second terminal device renders the received digital human model into a two-dimensional image for display.

FIG. 1B is a diagram of an architecture of another application scenario according to an embodiment of this application. The scenario shown in FIG. 1B includes a first terminal device, an OTT server, and a second terminal device. For functions implemented by the first terminal device and the second terminal device shown in FIG. 1B, refer to the functions implemented by the first terminal device and the second terminal device described in FIG. 1A. For functions implemented by the OTT server shown in FIG. 1B, refer to the functions implemented by the IMS system described in FIG. 1A. Details are not described herein.

Terminal devices (including the first terminal device, the second terminal device, and the terminal device) each shown in system architectures shown in FIG. 1A and FIG. 1B may also be referred to as user equipment (user equipment, UE), a mobile station (mobile station, MS), a mobile terminal (mobile terminal, MT) device, or the like, and are a device that provides speech and/or data connectivity for the user. For example, the terminal device may include a handheld device, a vehicle-mounted device, or the like that has a wireless connection function. Currently, the terminal device may be a device-to-device (device-to-device, D2D) terminal device, a vehicle-to-everything (vehicle-to-everything, V2X) terminal device, a machine-to-machine/machine type communication (machine-tomachine /machine-type communication, M2M/MTC) terminal device, an internet of things (internet of things, IoT) terminal device, a subscriber unit (subscriber unit), a subscriber station (subscriber station), a mobile station (mobile station), a remote station (remote station), an access point (AP), a remote terminal device (remote terminal), an access terminal device (access terminal), a user terminal device (user terminal), a user agent (user agent), or a user device (user device). For example, the terminal device may include a mobile phone (or referred to as a "cellular" phone), a computer with a mobile terminal device, or a portable, pocket-sized, handheld, or computer built-in mobile apparatus. For example, the terminal device may include a device, for example, a personal communication service (personal communication service, PCS) phone, a cordless phone, a session initiation protocol (session initiation protocol, SIP) phone, a wireless local loop (wireless local loop, WLL) station, or a personal digital assistant (personal digital assistant, PDA). Alternatively, the terminal device may be a tablet computer or a computer having a wireless transceiver function. The terminal device may alternatively be a VR terminal device, an AR terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), and/or the like. By way of example rather than limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on a body or integrated into clothes or an accessory of a user. The wearable device is not only a hardware device, but also implements a powerful function through software support, data exchange, and cloud interaction. In a broad sense, wearable intelligent devices include full-featured and largesized devices that can implement all or a part of functions without depending on a smartphone, for example, smart watches or smart glasses, and include devices that dedicated to only one type of application function and need to collaboratively work with another device such as a smartphone, for example, various smart bands, smart helmets, or smart jewelry for monitoring physical signs. For example, the second terminal device may be AR or VR glasses.

It should be noted that FIG. 1A and FIG. 1B are merely examples. A quantity of terminal devices included in the system architecture is not limited in this application. In FIG. 1A and FIG. 1B, only the first terminal device and the second terminal device are used as examples for description. In addition, ordinal numbers such as "first" and "second" are used to distinguish between a plurality of objects, and are not used to limit priorities or importance degrees of the plurality of objects. For example, the first terminal device and the second terminal device are merely used to distinguish between different terminal devices, but do not indicate different priorities, importance degrees, or the like of the two terminal devices.

The IMS system shown in FIG. 1A may include a plurality of core network function entities (referred to as network elements for short below) that can provide a multimedia server. For example, the IMS system may include the network elements such as an AS, a multimedia resource function (multimedia resource function, MRF), a call session control function (call session control function, CSCF), an IMS access gateway (IMS-access gateway, IMS-AGW), a session border controller (session border controller, SBC), and a unified media function (unified media function, UMF). Based on this, for a diagram of a scenario to which this application is applicable, refer to FIG. 2. It should be noted that composition of the IMS system is not limited to the IMS system shown in the scenario architectural diagram shown in FIG. 2. In this application, only the IMS system shown in FIG. 2 is used as an example for description, and not all network elements included in the IMS system are shown. In FIG. 2, the AS provides functions such as a digital human driving capability and a negotiation for a digital human driving type in a digital human communication process. The MRF includes two parts: a multimedia resource function controller (multimedia resource function controller, MRFC) and a multimedia resource function processor (multimedia resource function processor, MRFP), and is configured to mix and input a multimedia stream (for example, used in a multi-party conference), send a multimedia stream, and process the multimedia stream. The CSCF includes a proxy CSCF (P-CSCF), an interrogating CSCF (I-CSCF), and a serving CSCF (S-CSCF). The P-CSCF is an ingress node of an IMS network, and is mainly responsible for forwarding SIP signaling. The I-CSCF allocates the S-CSCF and queries the S-CSCF where the called party is located. The S-CSCF has a core control function in the IMS core network, is responsible for registration authentication, conference control, user data management, and the like of a terminal device, performs a basic session routing function for users of a calling party and a called party, and triggers, based on an IMS triggering rule subscribed by the user, routing of a value-added service to the AS when the conditions are met.

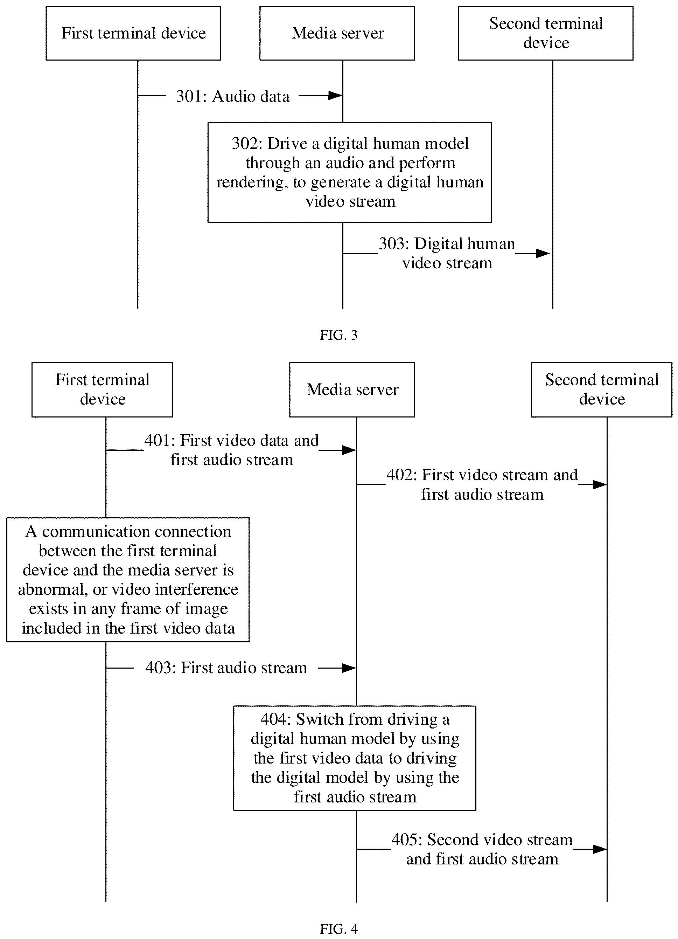

Currently, in both an IMS scenario and an OTT scenario, to improve viewing experience of the user, digital human communication may be implemented by using the video driving technology. In a process of driving a digital human model by using a video, because video data is large, when network quality between a capturing end and a network side is poor, cases such as frame freezing, overstock, a packet loss, or a frame loss occurs in a process of sending the video data. Consequently, digital human driving effect on the network side is poor, a digital human watched by a peer end of a call encounters cases such as frame freezing or deformation, and poor digital human communication experience is brought. To resolve this problem, a related technology is proposed to reduce a bit rate of video encoding. However, this manner also causes problems such as low image quality and inaccurate key point identification. In addition, the related technology is proposed to use an audio driving mode in a digital human communication scenario by further using a feature that an audio data packet is small. For example, FIG. 3 shows an audio driving-based digital human communication process. 301: The first terminal device sends audio data to a media server. 302: The media server drives a digital human model through an audio and performs rendering, to generate a digital human video stream. 303: The media server sends a digital human video stream to the second terminal device. For example, the media server shown in FIG. 3 may be a network element that is included in the IMS system in FIG. 1A and that is configured to execute digital human driving, for example, may be an MRF, or the media server may be the OTT server in FIG. 1B. Although this manner can resolve impact of network instability on data transmission, the audio-driven digital human can only change an expression and a lip shape according to a specified algorithm, and cannot completely follow an actual human expression and an action. In this case, viewing experience brought to the user is poor.

This application provides a digital human communication method. It is proposed that, when network quality between a capturing end and a network side is good, on the network side, digital human communication is performed by using a video-driven digital human model; or when network quality between a capturing end and a network side is poor, on the network side, a video-driven digital human model is switched to an audio-driven digital human model in time to continue digital human communication. Because the audio data is small, poor network quality does not affect transmission of the audio data. In this case, when the network quality is poor, the network side can normally drive the digital human by using the audio data, thereby improving smoothness of viewing digital human images for a communication counterpart and avoiding frame freezing and deformation.

The following describes the solutions of this application with reference to the application scenarios shown in FIG. 1A and FIG. 1B. FIG. 4 is a flowchart of a digital human communication method according to an embodiment of this application. The method procedure may be performed by a terminal device configured to perform digital human communication, a server deployed on a network side, a server cluster, a computing platform, or a system-on-a-chip (system-on-a-chip, SoC) on a computing platform, or the method procedure may be performed by a processor on a computing platform. The following uses an example in which the method procedure is performed by the server deployed on the network side for description. For ease of description, the method procedure shown in FIG. 4 is performed by a first terminal device, a second terminal device, and a media server. Optionally, the media server may be a network element that is in the IMS system shown in FIG. 1A and that is configured to perform a related service, for example, may be a network element, for example, an MRF, an SBC, or a UMF. Alternatively, the media server may be the OTT server shown in FIG. 1B. The first terminal device is a terminal device on a capturing side, the second terminal device is a terminal device on a display side, the first terminal device may be the first terminal device shown in FIG. 1A or FIG. 1B, and the second terminal device may be the second terminal device shown in FIG. 1A or FIG. 1B. The method procedure shown in FIG. 4 specifically includes the following steps.

401: A first terminal device sends first video data and a first audio stream to a media server.

The first video data may be generated by the first terminal device by capturing an expression and an action of a user of the first terminal device, and the first audio stream is generated by the first terminal device by capturing a voice of the user.

For example, the first terminal device may include an image capturing apparatus, for example, a camera, configured to capture the expression and the action of the user to obtain a plurality of frames of images. In an optional manner, the first terminal device may encode and package the plurality of frames of captured images. For example, the first terminal device may package the plurality of frames of images captured in real time into a plurality of RTP packets and sequentially transmit the plurality of RTP packets to the media server. The first video data may be a video stream including the plurality of RTP packets. In another optional manner, the first terminal device may perform feature extraction on each frame of image captured in real time, to obtain a video feature of each frame of image. For example, key point information in each frame of image may be extracted according to a key point detection algorithm. The first terminal device may package extracted video features to obtain a plurality of video data packets, and sequentially transmit the plurality of video data packets to the media server. The first video data may include the plurality of video data packets.

For example, the first terminal device may include a voice capturing apparatus, for example, a microphone, configured to capture the voice of the user. The first terminal device may encode and package voice captured in real time into a plurality of audio data packets, and sequentially transmit the plurality of audio data packets to the media server. The first audio stream may include the plurality of audio data packets.

402: The media server receives the first video data and the first audio stream, and sends a first video stream and the first audio stream to a second terminal device.

The first video stream is generated by the media server by driving the digital human model based on the first video data.

In a possible implementation, when the media server receives the first video data and the first audio stream from the first terminal device, the media server may query for a prestored digital human model corresponding to the first terminal device, load the digital human model obtained through querying, and drive the digital human model by using the first video data, to generate the first video stream. For a specific video driving process, refer to related descriptions in the foregoing embodiment. Details are not described herein. The media server sends the first video stream and the first audio stream to the second terminal device, so that the second terminal device displays the first video stream and plays the first audio stream.

403: When a communication connection between the first terminal device and the media server is abnormal, or video interference exists in any frame of image included in the first video data, the first terminal device stops sending the first video data to the media server, and continues to send the first audio stream to the media server.

In this application, the abnormal communication connection represents that a phenomenon like a packet loss or overstock occurs in data transmission between the first terminal device and the media server because a transmission channel between the first terminal device and the media server has problems such as air interface jitter, signal interference, or insufficient bandwidth. The abnormal communication connection may also be understood as poor network quality between the first terminal device and the media server. Because the audio data packet is small, poor network quality does not affect transmission of the audio stream. Therefore, this application proposes that, when the network quality is poor and video data transmission is blocked, transmission of the video data is stopped, and transmission of the audio stream continues, so that the media server drives the digital human.

In this application, a case in which the video interference occurs in an image means that the image includes two or more profile pictures, or the image does not include a profile picture. In this case, effect of driving the digital human model by the media server based on the received video data is poor. Consequently, display effect of the second terminal device is poor, and viewing experience of the user is affected. Therefore, this application proposes that, when the first terminal device detects that the video interference exists in the any frame of image included in the first video data, the first terminal device stops sending the first video data to the media server, continues to send the first audio stream, to indicate the media server to switch from driving the digital human model by using the first video data to driving the digital human model by using the first audio stream.

404: The media server switches from driving the digital human model by using the first video data to driving the digital model by using the first audio stream.

Based on the foregoing descriptions in step 403, it can be learned that poor network quality does not affect transmission of the audio stream. In this case, when the network quality is poor, the audio stream continues to be transmitted to drive the digital human model, to avoid problems like frame freezing and display deformation.

405: The media server sends a second video stream and the first audio stream to the second terminal device.

The second video stream is generated by the media server by driving the digital human model based on the first audio stream. For a specific audio driving process, refer to related descriptions in the foregoing embodiment. Details are not described herein. In an optional manner, when the media server generates the second video stream, the media server may use a background part of a last frame of image included in the first video stream as a background part of an image included in the second video stream. For example, after the media server drives the digital human model by using the first audio stream, the media server may render the driven digital human model into a two-dimensional digital human image, and synthesize the digital human image obtained through rendering and the background part of the last frame of image included in the first video stream (for example, an alpha compositing technology may be used), to obtain images to be output. Further, the media server may encode and package a plurality of frames of images obtained through synthesizing, and then send the encoded and packaged images to the second terminal device. In another optional manner, when the media server generates the second video stream, the media server may alternatively use a preset virtual background as a background part of an image included in the second video stream. In another optional manner, the image included in the second video may not include the background part, that is, each frame of image includes only a two-dimensional digital human image obtained by rendering the driven digital human model.

Based on the foregoing solution, this application proposes that in a digital human communication process, when a communication connection between a network side and a capturing end is normal, the network side performs video driving on the digital human model by using video data captured by the capturing end. In this way, it is ensured that an expression and an action of the digital human image displayed on a display end can completely follow an actual expression movement of the human. Compared with audio driving, video driving can improve viewing experience of the user. When network quality between the network side and the capturing end deteriorates and video data transmission is blocked, the network side may switch from video driving to audio driving in time, to ensure smooth display on the display end and avoid a problem like frame freezing or deformation.

In some embodiments, in a process in which the media server drives the digital human model based on the first audio stream from the first terminal device, if the communication connection between the first terminal device and the media server is normally restored, and no video interference exists in the image captured by the first terminal device, the media server may be switched from audio driving back to video driving. For example, when the communication connection between the first terminal device and the media server is normally restored, and no video interference exists in the image captured by the first terminal device, the first terminal device may send the second video data to the media server, the media server may switch from driving the digital human model by using the first audio stream to driving the digital human model by using the second video data. The second video data is generated by the first terminal device by capturing an expression and an action of the user after the communication connection is normally restored (or the video interference disappears). Further, the media server may render the digital human model driven by the second video data to obtain a third video stream, and send the third video stream and the first audio stream to the second terminal device.

For example, the action of determining that the communication connection between the first terminal device and the media server is abnormal (or normally restored) may be performed by the first terminal device or may be performed by the media server, and the step of determining whether the video interference exists in the image may be performed by the first terminal device. The following separately describes processes of determining that the communication connection is abnormal, that the communication connection is normally restored, and whether the video interference exists.

Case 1: The first terminal device determines that the video interference exists in the image.

In some embodiments, the first terminal device may perform profile picture detection on each frame of captured image according to a profile picture detection algorithm, to determine a quantity of profile pictures included in the image. When the first terminal device detects that a quantity of profile pictures included in a frame of image is greater than 1 or less than 1, the first terminal device determines that the video interference exists in the frame of image. When the first terminal device determines that the video interference exists, the first terminal device may stop sending the first video data to the media server, continue to send the first audio stream, and indicate the media server to switch the driving mode. For example, when the first terminal device indicates the media server to switch the driving mode, the first terminal device may send a switching indication to the media server, to indicate the media server to switch from driving the digital human model by using the first video data to driving the digital human model by using the first audio stream. Optionally, the switching indication may be carried in a packet header of a data packet sent by the first terminal device to the media server, or the switching indication may be information carried in indication signaling separately sent by the first terminal device to the media server. The following separately describes the two manners of sending the switching indication.

Embodiment 1: The switching indication is carried in the packet header of the data packet sent by the first terminal device to the media server.

In Embodiment 1, the switching indication sent by the first terminal device to the media server may be an indication parameter included in a packet header of a first video data packet, or may be an indication parameter included in a packet header of a first audio data packet. The first video data packet is a last video data packet in the plurality of video data packets for carrying the first video data, and the first audio data packet is an audio data packet sent by the first terminal device when the first terminal device determines that the video interference exists in a captured image. For ease of description, in Embodiment 1, an example in which the switching indication is the indication parameter included in the packet header of the first audio data packet is used for description.

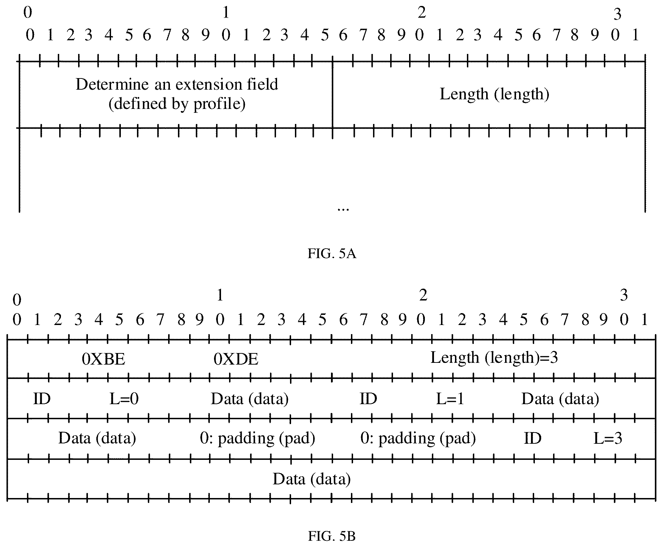

For example, when the switching indication is one indication parameter in the packet header of the first audio data packet, the indication parameter may be an indication parameter that is in a form of a one-byte header and that is newly added to an extension field (header extension) in the packet header. For example, FIG. 5A is an example that is of a packet header of an audio data packet and to which no indication parameter is added, and FIG. 5B is an example that is of a packet header of an audio data packet and to which indication parameters are added. In FIG. 5A, "defined by profile" represents a header extension to be used. For example, when the one-byte header extension manner is used, "defined by profile" is fixed at "0XBEDE." "length" in FIG. 5A indicates a length of the header extension. FIG. 5B shows a newly added header extension with a length of 3, where ID is an ID of the packet header of the data packet, and "data" is a newly added indication parameter. For example, when a value of "data" is 0, it may indicate that an audio driving mode is used; or when a value of "data" is 1, it may indicate that an audio driving mode is used; and optionally, when no header extension exists in the packet header of the audio data packet, it may also indicate that the audio driving mode is used.

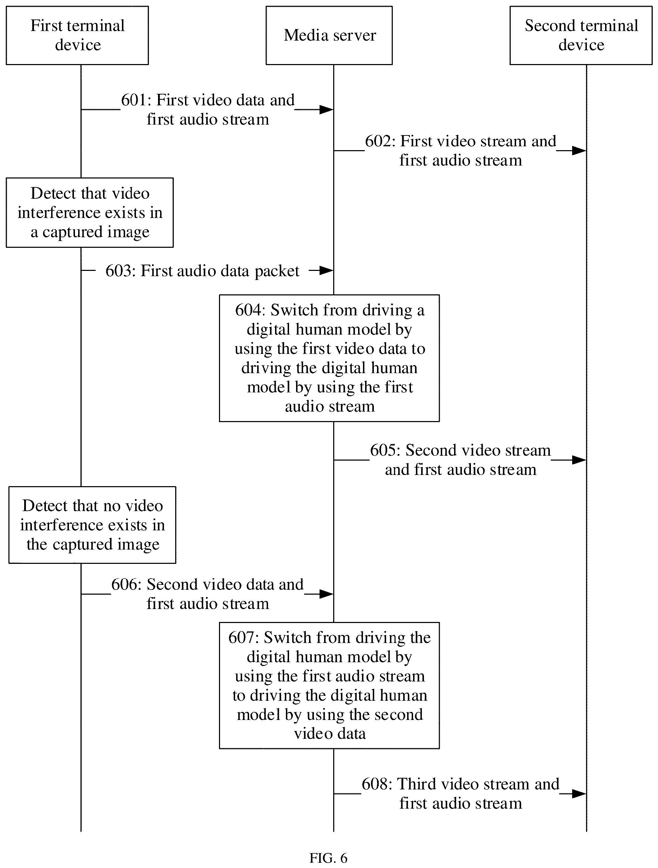

The following describes, based on the manner of sending the switching indication provided in Embodiment 1 and with reference to specific embodiments, a digital human communication process provided in this application. FIG. 6 is a flowchart of a digital human communication method according to an embodiment of this application. For example, the media server shown in FIG. 6 may be a network element that is in the IMS system shown in FIG. 1A and that is configured to perform a related service, for example, may be a network element, for example, an MRF, an SBC, or a UMF. Alternatively, the media server may be the OTT server shown in FIG. 1B. The method procedure shown in FIG. 6 specifically includes the following steps.

601: A first terminal device sends first video data and a first audio stream to a media server.

602: The media server receives the first video data and the first audio stream, and sends a first video stream and the first audio stream to a second terminal device.

For example, for descriptions of related content of step 601 and step 602, refer to step 401 and step 402 in FIG. 4. Details are not described herein.

603: The first terminal device sends a first audio data packet to the media server when the first terminal device detects that video interference exists in a captured image.

The first audio data packet is a first audio data packet included in the first audio stream, and the first audio data packet includes an indication parameter indicating the media server to switch from driving a digital human model by using the first video data to driving a digital human model by using the first audio stream. For example, for related descriptions of the indication parameter included in the first audio data packet, refer to the descriptions in the foregoing embodiment. Details are not described herein. When the first terminal device detects the video interference, the first terminal device further stops sending the first video data to the media server, and continues to send the first audio stream to the media server.

604: The media server receives the first audio data packet, and switches from driving the digital human model by using the first video data to driving the digital human model by using the first audio stream.

For example, in a video driving process, the media server receives the first audio data packet, and parses the first audio data packet to obtain the indication parameter. Driving the digital human model by using the first video data is stopped based on an indication of the indication parameter, and the digital human model is switched to be driven by using the first audio stream. In an optional manner, when the media server is switched to audio driving, the media server may load, from storage space, a pre-trained model used for audio driving, and may unload a model used for video driving. In another optional manner, after the media server loads a model used for audio driving, the media server may also retain a model used for video driving, so that the model can be quickly started when audio driving is subsequently switched back to video driving, thereby reducing time for loading the model.

605: The media server sends a second video stream and the first audio stream to the second terminal device.

The second video stream is generated by the media server by driving the digital human model based on the first audio stream.

606: The first terminal device sends second video data and the first audio stream to the media server when the first terminal device detects that no video interference exists in the captured image.

When the first terminal device detects that no video interference exists in the captured image, each audio data packet included in the first audio stream sent by the first terminal device to the media server does not include an indication parameter indicating the media server to switch from driving the digital human model by using the first video data to driving the digital human model by using the first audio stream. The second video data is generated by the first terminal device by capturing an expression and an action of a user when the first terminal device determines that no video interference exists in the captured image.

607: The media server receives the second video data and the first audio stream, and switches from driving the digital human model by using the first audio stream to driving the digital human model by using the second video data.

608: The media server sends a third video stream and the first audio stream to the second terminal device.

The third video stream is generated by the media server by driving the digital human model by using the second video data.

Based on the foregoing solution, the switching indication is carried in the packet header of the data packet sent by the first terminal device to the media server. Compared with a signaling transmission manner, this can enable the media server to obtain the switching indication more quickly, thereby reducing a delay.

Embodiment 2: The switching indication is information carried in indication signaling sent by the first terminal device to the media server.

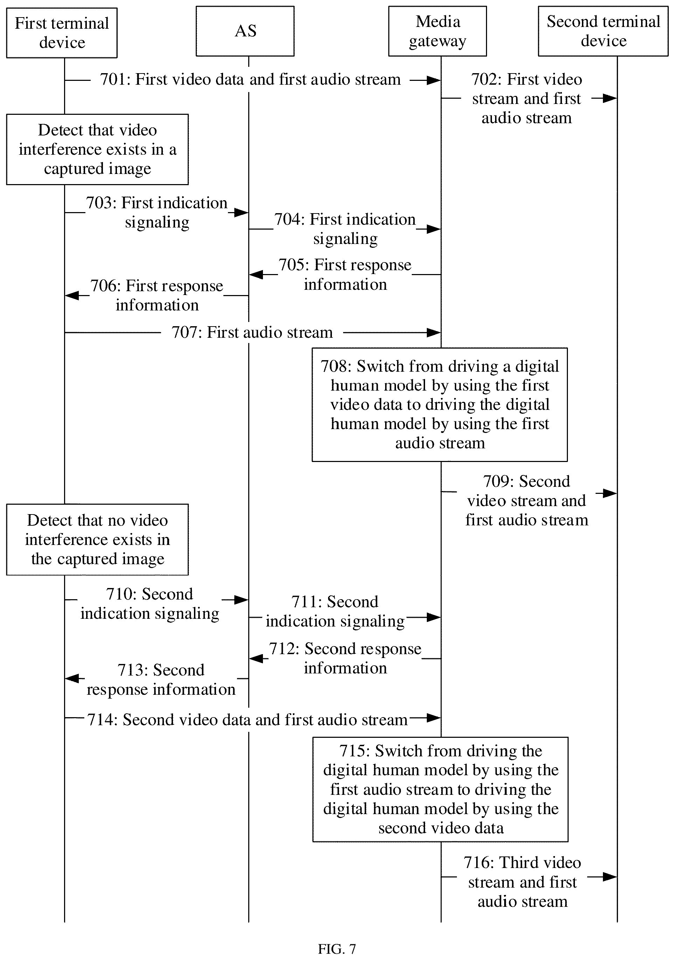

For example, an application scenario in which Embodiment 2 is applied to the IMS system. The solution provided in Embodiment 2 is described with reference to FIG. 1A and FIG. 2. In a possible implementation, when the first terminal device determines that video interference occurs, the first terminal device may send indication signaling (for example, may be SIP signaling) carrying switching indication to a network element AS included in the IMS system, the AS may transparently transmit the indication signaling to a media server in the IMS system (the media server may be a network element, for example, an MRF, an SBC, or a UMF included in the IMS system, and the media server in Embodiment 2 may also be referred to as a media gateway, and the following uses the media gateway as an example for description), receive response information returned by the media server, and transparently transmit the response information to the first terminal device. In this way, the first terminal device may stop sending the first video data to the media gateway, and continue to send the first audio stream, and the media gateway switches from driving the digital human model by using the first video data to driving the digital human model by using the first audio stream. The following describes, based on the manner of sending the switching indication provided in Embodiment 2 and with reference to specific embodiments, a digital human communication process provided in this application. FIG. 7 is a flowchart of a digital human communication method according to an embodiment of this application.

701: A first terminal device sends first video data and a first audio stream to a media gateway.

702: The media gateway receives the first video data and the first audio stream, and sends a first video stream and the first audio stream to a second terminal device.

For example, for descriptions of related content of step 701 and step 702, refer to step 401 and step 402 in FIG. 4. Details are not described herein.

703: The first terminal device sends first indication signaling to an AS when the first terminal device detects that video interference exists in a captured image.

The first indication signaling carries a switching indication indicating the media gateway to switch from driving a digital human model by using the first video data to driving a digital human model by using the first audio stream. For example, the first indication signaling may be SIP signaling. For example, the switching indication may be carried by using a "SIP re-invite (SIP Re-Invite)" parameter. For a representation meaning of a value of the switching indication, refer to related descriptions in Embodiment 1. Details are not described herein.

704: The AS receives the first indication signaling, and sends the first indication signaling to the media gateway.

705: The media gateway receives the first indication signaling, and sends first response information to the AS.

The first response information indicates that the media gateway successfully receives the first indication signaling.

706: The AS receives the first response information, and sends the first response information to the first terminal device.

707: The first terminal device receives the first response information, stops sending the first video data to the media gateway, and continues to send the first audio stream.

708: The media gateway receives the first audio stream, and switches from driving the digital human model by using the first video data to driving the digital human model by using the first audio stream.

709: The media gateway sends second video stream and the first audio stream to the second terminal device.

The second video stream is generated by the media gateway by driving the digital human model by using the first audio stream.

710: The first terminal device sends second indication signaling to the AS when the first terminal device detects that no video interference exists in the captured image.

711: The AS receives the second indication signaling, and sends the second indication signaling to the media gateway.

712: The media gateway receives the second indication signaling, and sends second response information to the AS.

The second response information indicates that the media gateway successfully receives the second indication signaling.

713: The AS receives the second response information, and sends the second response information to the first terminal device.

714: The first terminal device receives the second response information, and sends second video data and the first audio stream to the media gateway.

The second video data is generated by the first terminal device by capturing an expression and an action of a user when the first terminal device determines that no video interference exists in the captured image.

715: The media gateway receives the second video data and the first audio stream, and switches from driving the digital human model by using the first audio stream to driving the digital human model by using the second video data.

716: The media gateway sends a third video stream and the first audio stream to the second terminal device.

The third video stream is generated by the media gateway by driving the digital human model by using the second video data.

Case 2: The media server determines that a communication connection is abnormal (or normally restored).

In an optional manner, when the media server determines that a frame loss occurs in the first video data, the media server may determine that the communication connection to the first terminal device is abnormal. For example, the media server may collect statistics on timestamps of a plurality of image frames carrying the first video data. When a difference between timestamps of two adjacent image frames exceeds a specified time difference threshold, it may be determined that a frame loss occurs. For example, if an interval between two adjacent frames of images is 30 ms, when a difference between timestamps of the two adjacent frames of images obtained through statistics collection exceeds 60 ms, it may be determined that a frame loss occurs, to determine that the communication connection to the first terminal device is abnormal.

In another optional manner, when the media server determines that a receiving rate of the plurality of image frames carrying the first video data is less than a speed threshold, the media server may further determine that the communication connection to the first terminal device is abnormal. For example, if an arrival rate of a normal image frame is 25 frames/second, but only 20 frames are received in one second, it may be determined that the receiving rate of the image frame is less than the speed threshold, to determine that the communication connection to the first terminal device is abnormal.

Similarly, when no frame loss exists in the first video data and the media server determines that the receiving rate of the plurality of image frames carrying the first video data is not less than the speed threshold, the media server may also determine that the communication connection to the first terminal device is normally restored. The following provides descriptions with reference to specific embodiments.

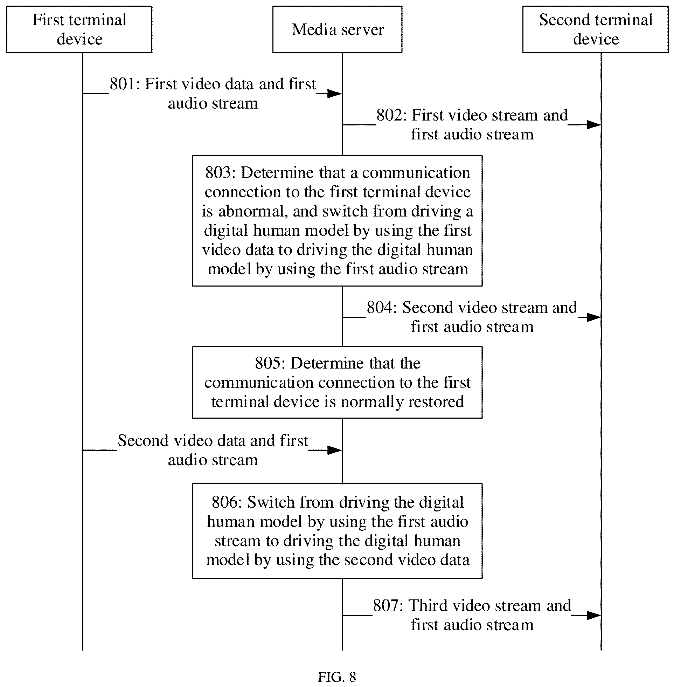

FIG. 8 is a flowchart of a digital human communication method according to an embodiment of this application. For example, the media server shown in FIG. 8 may be a network element that is in the IMS system shown in FIG. 1A and that is configured to perform a related service, for example, may be a network element, for example, an MRF, an SBC, or a UMF. Alternatively, the media server may be the OTT server shown in FIG. 1B. The method procedure shown in FIG. 8 specifically includes the following steps.

801: A first terminal device sends first video data and a first audio stream to a media server.

802: The media server receives the first video data and the first audio stream, and sends a first video stream and the first audio stream to a second terminal device.

For example, for descriptions of related content of step 801 and step 802, refer to step 401 and step 402 in FIG. 4. Details are not described herein.

803: The media server determines that a communication connection to the first terminal device is abnormal, and switches from driving a digital human model by using the first video data to driving a digital human model by using the first audio stream.

For example, for a manner in which the media server determines that the communication connection is abnormal and a process in which the audio drives the digital human model, refer to related descriptions in the foregoing embodiment. Details are not described herein.

804: The media server sends a second video stream and the first audio stream to the second terminal device.

The second video stream is generated by the media server by driving the digital human model based on the first audio stream.

805: The media server determines that the communication connection to the first terminal device is normally restored, and receives second video data and the first audio stream from the first terminal device.

For example, the second video data may be generated by the first terminal device by capturing an expression and an action of a user after the communication connection to the media server is normally restored. Optionally, the second video data may include a plurality of video data packets generated after the first terminal device encodes and packages a plurality of frames of captured images. Alternatively, the second video data may be a video feature obtained by the first terminal device by performing video feature extraction on a plurality of frames of captured images.

806: The media server switches from driving the digital human model by using the first audio stream to driving the digital human model by using the second video data.

807: The media server sends a third video stream and the first audio stream to the second terminal device.

The third video stream is generated by the media server by driving the digital human model by using the second video data.

Case 3: The first terminal device determines that the communication connection is abnormal (or normally restored).

In an optional manner, when the first terminal device determines that a sending rate of a plurality of video data packets for carrying the first video data is less than an encoding bit rate of the first video data, and a difference between the bit rate and the sending rate is greater than a specified threshold, the first terminal device may determine that the communication connection to the media server is abnormal. In another optional manner, when the first terminal device determines that a packet loss rate of a plurality of video data packets for carrying the first video data is greater than a packet loss rate threshold, the first terminal device may determine that the communication connection to the media server is abnormal. Similarly, the first terminal device may determine, based on the sending rate and the packet loss rate of the video data packet, whether the communication connection to the media server is normally restored.

For example, when the first terminal device determines that the communication connection to the media server is abnormal, the first terminal device may notify the media server to switch the driving mode. For a specific notification manner, refer to related descriptions in Embodiment 1 and Embodiment 2 in Case 1.

Before the digital human communication solution described in the foregoing embodiment is performed, this application further provides a solution of establishing a communication connection between a media server and a first terminal device. The following separately describes a process of establishing a communication connection in an OTT application scenario and an IMS application scenario.

Scenario 1: The communication connection between the first terminal device and an OTT server is established in the OTT application scenario.

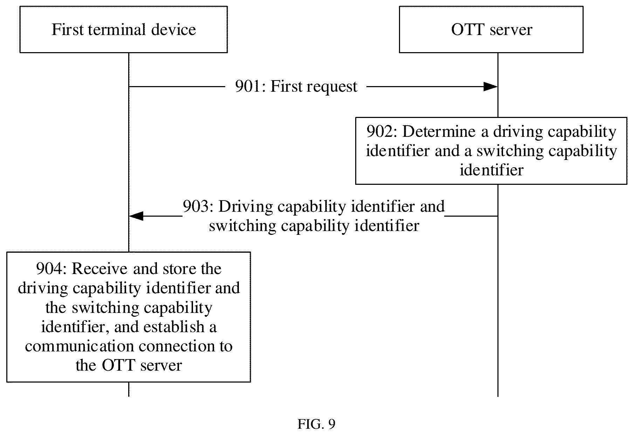

In the scenario 1, the OTT server may complete, according to a hypertext transfer protocol (hypertext transfer protocol, HTTP) signaling or a hypertext transfer security protocol (hypertext transfer protocol secure, HTTPS) signaling, a process of establishing a communication connection to the first terminal device. FIG. 9 is a flowchart of a communication connection establishment method according to an embodiment of this application. For example, the OTT server shown in FIG. 9 may include a digital human service control server, a signaling distribution server, and a digital human media processing server. An internal interaction procedure of the OTT server is not described in detail in this application. The method procedure shown in FIG. 9 specifically includes the following steps.

901: A first terminal device sends a first request to an OTT server.

The first request is used to request to establish a communication connection to the OTT server. Alternatively, the communication connection may be referred to as a multimedia data transmission channel. For ease of description, the communication connection is still used as an example for further description below.

For example, the first request may carry a related parameter of a digital human corresponding to the first terminal device, and the parameter may be in a json or xml format.

### Parameters in the json format:

```
            Content-Type: application/j son
            {
            "MH-Capability": {
            "live_type": "0, 1"} (representing a communication
type, where a value 0 indicates non-digital human
 communication, and a value 1 indicates digital human communication)
            }
```

### XML file format:

```
            Content-Type:application/xml
            <MH-Capability>
            <live_type Value="0, 1"> (representing a communication
type, where a value 0 indicates non-digital
 human communication, and a value 1 indicates digital human communication)
            </MH-Capability>
```

902: The OTT server receives the first request, and determines a driving capability identifier and a switching capability identifier.

The switching capability identifier represents whether the OTT server supports switching from a first driving mode to a second driving mode, where the first driving mode is driving a digital human model by using video data, and the second driving mode is driving a digital human model by using an audio stream. The driving capability identifier represents a driving type that can be supported by the OTT server.

903: The OTT server sends the driving capability identifier and the switching capability identifier to the first terminal device.

For example, the driving capability identifier and the switching capability identifier may be in the json or xml format.

### Identifiers in the json format:

```
          Content-Type:application/json
          {
          "MH-Capability-Negotiation": {
          "mh_option": "0, 1, 2, 3," (representing a driving capability
of the OTT server, where a value 0 indicates
 that driving is not supported, a value 1 indicates that audio
driving is supported, a value 2 indicates that video driving
 is supported, and a value 3 indicates that video driving
and audio driving are supported)
          "switch_flag": "0/1"} (representing a switching
capability identifier of the OTT server, where a value 0
 indicates that switching from the first driving mode to
the second driving mode is not supported, and a value 1 indicates
 that switching from the first driving mode to
the second driving mode is supported)
          }
```

### Identifiers in the XML format:

```
          Content-Type:application/xml
          <MH-Capability-Negotiation>
          <mh_option Value="0,1,2,3"> (representing a driving
capability of the OTT server, where a value 0
 indicates that driving is not supported, a value 1 indicates
that audio driving is supported, a value 2 indicates that video
 driving is supported, and a value 3 indicates that video
driving and audio driving are supported)
          <switch_flag Value="0/1"> (representing a switching
capability identifier of the OTT server, where a value
 0 indicates that switching from the first driving mode to
the second driving mode is not supported, and a value 1
 indicates that switching from the first driving mode
to the second driving mode is supported)
          </MH-Capability-Negotiation>
```

904: The first terminal device receives and stores the driving capability identifier and the switching capability identifier, and establishes a communication connection to the OTT server.

It should be noted that, only steps of negotiating a driving capability and a switching capability between the first terminal device and the OTT server are described in the foregoing steps 901 to 904. When a communication connection is established, the OTT server and the first terminal device may further negotiate a protocol used for data transmission, which is not described herein. After the step of setting the first terminal device to negotiate the drive capability and the switching capability with the OTT server is completed, the communication connection is established. Further, the first terminal device and the OTT server may transmit video data and audio data through the communication connection.

Scenario 2: In the IMS application scenario, the first terminal device serves as a calling party of a call to establish a communication connection to the IMS system.

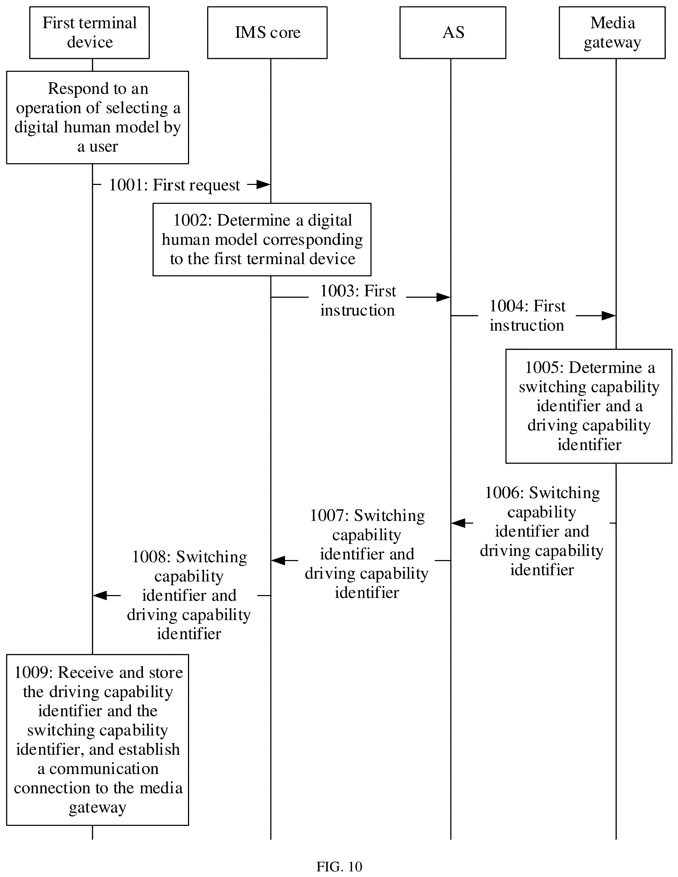

In the scenario 2, the first terminal device negotiates with the IMS system through SIP signaling to establish the communication connection. For ease of description, network elements included in the IMS system are classified into an IMS core (core), an AS, and a media gateway (which may also be referred to as a media server, and the media gateway is used as an example for description in the scenario 2). The IMS core includes a CSCF network element in the IMS system, and the media gateway may be a network element such as an MRF, an SBC, or a UMF included in the IMS system. Specifically, when requesting to establish a communication connection as the calling party, the first terminal device may send, to the IMS system, a communication request that carries a related parameter of a digital human model selected by a user. After the IMS system receives the request, the IMS system may send a switching capability identifier and a driving capability identifier that are supported by the IMS system (for descriptions of the two capability identifiers, refer to the foregoing scenario 1) to the first terminal device. The first terminal device may store the driving capability identifier and the switching capability identifier of the IMS system for subsequent digital human communication. The following describes a process of establishing a communication connection in the scenario 2 with reference to a specific embodiment. FIG. 10 is a flowchart of a communication connection establishment method according to an embodiment of this application. The method specifically includes the following steps.

1001: A first terminal device sends a first request to an IMS core in response to an operation of selecting a digital human model by a user.

The first request carries a related parameter of the digital human model selected by the user, and the related parameter indicates a type of an ongoing call (a digital human call or a non-digital human call).

1002: The IMS core receives the first request, and determines a digital human model corresponding to the first terminal device.

1003: The IMS core sends a first instruction to an AS.

The first instruction instructs to negotiate a driving capability and a switching capability. The first instruction carries a related parameter of the digital human model corresponding to the first terminal device.

1004: The AS receives the first instruction, and sends the first instruction to a media gateway.

1005: The media gateway receives the first instruction, and determines a switching capability identifier and a driving capability identifier.

1006: The media gateway sends the switching capability identifier and the driving capability identifier to the AS.

For example, the switching capability identifier and the driving capability identifier may be carried in a session description protocol (session description protocol, SDP) data packet and sent to the AS. For example, a packet header of the SDP packet may include the switching capability identifier and the driving capability identifier.

1007: The AS receives the switching capability identifier and the driving capability identifier, and sends the switching capability identifier and the driving capability identifier to the IMS core.

1008: The IMS core receives the switching capability identifier and the driving capability identifier, and sends the switching capability identifier and the driving capability identifier to the first terminal device.

1009: The first terminal device receives and stores the driving capability identifier and the switching capability identifier, and establishes a communication connection to the media gateway.

Scenario 3: In the IMS application scenario, the first terminal device serves as a called party of a call to establish a communication connection to the IMS system.

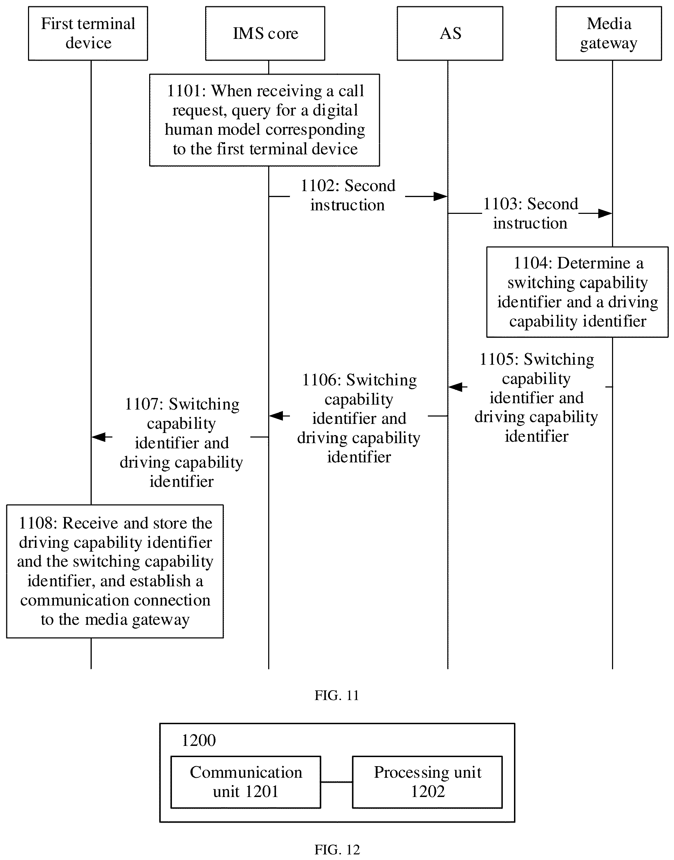

A difference between the scenario 3 and the scenario 2 lies in that, when the first terminal device serves as the calling party, the IMS system may be notified whether to perform a digital human call. However, when the first terminal device serves as the called party, the IMS system cannot know whether the first terminal device can perform a digital human call. Therefore, two solutions are proposed for this problem in a related technology. In a first solution, the IMS system queries whether a digital human model corresponding to the first terminal device is stored, and if the digital human model corresponding to the first terminal device is stored, the IMS system triggers a digital human call. In a second solution, after the IMS system establishes the communication connection to the first terminal device, the IMS system determines, based on an indication of the first terminal device, whether to trigger a digital human call. Correspondingly, in the IMS system, when the first terminal device negotiates the switching capability and the driving capability, different negotiation manners may be implemented for the two solutions. For the first solution, this application proposes that the IMS system may directly send the driving capability identifier and the switching capability identifier of the IMS system to the first terminal device after the IMS system obtains, through querying, the digital human model corresponding to the first terminal device. For the second solution, this application proposes that the IMS system may send the driving capability identifier and the switching capability identifier of the IMS system to the first terminal device after the IMS system establishes the communication connection to the first terminal device. The following describes a process of establishing the communication connection according to the first solution (the IMS system directly sends the driving capability identifier and the switching capability identifier of the IMS system to the first terminal device after the IMS system obtains, through querying, the digital human model corresponding to the first terminal device) as an example. FIG. 11 is a flowchart of a communication connection establishment method according to an embodiment of this application. The method specifically includes the following steps.

1101: When receiving a call request, an IMS core queries for a digital human model corresponding to a first terminal device.

The call request is from a calling party. For example, the calling party may be a second terminal device, and the call request is used to request to make a call to the first terminal device.

1102: The IMS core sends a second instruction to an AS.

The second instruction instructs to negotiate a driving capability and a switching capability.

1103: The AS receives the second instruction, and sends the second instruction to a media gateway.

1104: The media gateway receives the second instruction, and determines a switching capability identifier and a driving capability identifier.

1105: The media gateway sends the switching capability identifier and the driving capability identifier to the AS.

1106: The AS receives the switching capability identifier and the driving capability identifier, and sends the switching capability identifier and the driving capability identifier to the IMS core.

1107: The IMS core receives the switching capability identifier and the driving capability identifier, and sends the switching capability identifier and the driving capability identifier to the first terminal device.

1108: The first terminal device receives and stores the switching capability identifier and the driving capability identifier, and establishes a communication connection to the media gateway.

The following describes, with reference to the accompanying drawings, a communication apparatus for implementing the foregoing method in embodiments of this application. Therefore, all the foregoing content may be used in the following embodiments. Repeated content is not described.

FIG. 12 is a schematic block diagram of a digital human communication apparatus 1200 according to an embodiment of this application. The digital human communication apparatus 1200 may correspondingly implement functions or steps implemented by the media server or the first terminal device in the foregoing method embodiments. The digital human communication apparatus may include a communication unit 1201 and a processing unit 1202. Optionally, the digital human communication apparatus may further include a storage unit. The storage unit may be configured to store instructions (code or a program) and/or data. The communication unit 1201 and the processing unit 1202 may be coupled to the storage unit. For example, the processing unit 1202 may read the instructions (the code or the program) and/or the data in the storage unit, to implement a corresponding method. The foregoing units may be independently disposed, or may be partially or completely integrated.

In some possible scenarios, the digital human communication apparatus 1200 can correspondingly implement behavior and functions of the first terminal device in the foregoing method embodiments. For example, the digital human communication apparatus 1200 may be the first terminal device, or may be a component (for example, a chip or a circuit) used in the first terminal device. The communication unit 1201 may be configured to perform all receiving or sending operations performed by the first terminal device in the foregoing embodiments. For example, the communication unit 1201 may be configured to perform an operation of sending the first video data and the first audio stream performed by the first terminal device in the embodiment shown in FIG. 4. The processing unit 1202 may be configured to perform all operations that are performed by the first terminal device in the embodiment shown in FIG. 4 and that are except the receiving and sending operations, and/or is configured to support another process of the technology described in this specification.

For example, the communication unit 1201 is configured to send the first video data and the first audio stream to the media server. The processing unit 1202 is configured to: when a communication connection to the media server is abnormal, or video interference exists in any frame of image included in the first video data, indicate the communication unit 1201 to stop sending the first video data to the media server. When the first video data is not sent, the first audio stream is used by the media server to drive the digital human model to obtain a second video stream for communicating with a second terminal device. The first video data is generated by capturing an expression and an action of a user of the first terminal device, and the first audio stream is generated by capturing a voice of the user. The first video data is used by the media server to drive a digital human model to obtain a first video stream for communicating with the second terminal device, and the video interference represents that a quantity of profile pictures included in the any frame of image is not unique.

In some other possible scenarios, the digital human communication apparatus 1200 can correspondingly implement behavior and functions of the media server in the foregoing method embodiments. For example, the digital human communication apparatus 1200 may be a media server, or may be a component (for example, a chip or a circuit) used in the media server. The communication unit 1201 may be configured to perform all receiving or sending operations performed by the media server in the foregoing embodiments. For example, the communication unit 1201 may be configured to perform an operation of receiving first video data and a first audio stream or an operation of sending a first video stream and a first audio stream that is performed by the media server in the embodiment shown in FIG. 4. The processing unit 1202 may be configured to perform all operations that are performed by the media server in the embodiment shown in FIG. 4 and that are except receiving and sending operations, and/or configured to support another process of the technology described in this specification.

For example, the communication unit 1201 is configured to receive the first video data and the first audio stream from the first terminal device, and is further configured to send the first video stream and the first audio stream to the second terminal device. The processing unit 1202 is configured to: when a communication connection to the first terminal device is abnormal, switch from driving the digital human model by using the first video data to driving the digital human model by using the first audio stream, to obtain a second video stream. The communication unit 1201 is further configured to send the second video stream and the first audio stream to the second terminal device. The first video data is generated by the first terminal device by capturing an expression and an action of a user of the first terminal device, the first audio stream is generated by the first terminal device by capturing a voice of the user, and the first video stream is generated by driving a digital human model based on the first video data.

For other operations performed by the communication unit 1201 and the processing unit 1202, refer to related descriptions in the foregoing method embodiments.

It should be noted that, in embodiments of this application, division into the units is an example, and is merely a logical function division. In actual implementation, another division manner may be used. Functional units in embodiments of this application may be integrated into one processing unit 1202, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in a form of a software product. The computer software product is stored in a storage medium and includes several instructions for instructing a computer device (which may be a personal computer, a server, a network device) or a processor (processor) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

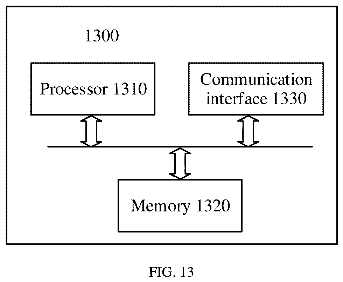

It should be understood that the processing unit 1202 in embodiments of this application may be implemented by a processor or a processor-related circuit component, and the communication unit 1201 may be implemented by a transceiver, a transceiver-related circuit component, or a communication interface. For example, the digital human communication apparatus in the foregoing embodiment may also be in a form shown in FIG. 13. An apparatus 1300 shown in FIG. 13 includes at least one processor 1310 and a memory 1320, and optionally, may further include a communication interface 1330.

A specific connection medium between the processor 1310 and the memory 1320 is not limited in embodiments of this application.

The apparatus in FIG. 13 further includes the communication interface 1330. When communicating with another device, the processor 1310 may perform signal transmission through the communication interface 1330.

When the digital human communication apparatus is in the form shown in FIG. 13, the processor 1310 in FIG. 13 may invoke computer-executable instructions stored in the memory 1320, so that the apparatus 1300 performs the method performed by the digital human communication apparatus in any one of the foregoing method embodiments.

An embodiment of this application further provides a chip system. The chip system includes a processor. The processor is configured to invoke a computer program or computer instructions stored in a memory, so that the processor performs the method according to any one of the foregoing embodiments.

In a possible implementation, the processor is coupled to the memory through an interface.

In a possible implementation, the chip system further includes a memory. The memory stores a computer program or computer instructions.

An embodiment of this application further relates to a processor. The processor is configured to invoke a computer program or computer instructions stored in a memory, so that the processor performs the method according to any one of the foregoing embodiments.

It should be understood that embodiments of this application may be provided as a method, a system, or a computer program product. Therefore, this application may use a form of a hardware-only embodiment, a softwareonly embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

The computer program instructions may be stored in a computer-readable storage that can instruct the computer or any other programmable data processing device to work in a specific manner, so that the instructions stored in the computer-readable storage generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to embodiments of this application without departing from the scope of embodiments of this application. In this case, this application is intended to cover these modifications and variations of embodiments of this application provided that they fall within the scope of protection defined by the following claims and their equivalent technologies.

## Claims

1. A digital human communication method, applied to a media server, wherein the method comprises:
receiving first video data and a first audio stream from a first terminal device, wherein the first video data is generated by the first terminal device by capturing an expression and an action of a user of the first terminal device, and the first audio stream is generated by the first terminal device by capturing a voice of the user;
sending a first video stream and the first audio stream to a second terminal device, wherein the first video stream is generated by driving a digital human model based on the first video data;
when a communication connection to the first terminal device is abnormal, switching from driving the digital human model by using the first video data to driving the digital human model by using the first audio stream; and
sending a second video stream and the first audio stream to the second terminal device, wherein the second video stream is generated by driving the digital human model based on the first audio stream.

2. The method according to claim 1, wherein the following manner is used to determine that the communication connection to the first terminal device is abnormal:
determining that a frame loss occurs in the first video data; or
determining that a receiving rate of a plurality of image frames carrying the first video data is less than a speed threshold.

3. The method according to claim 1, wherein the method further comprises:
when the communication connection to the first terminal device is abnormal, receiving a switching indication sent by the first terminal device, wherein the switching indication indicates the media server to switch from driving the digital human model by using the first video data to driving the digital human model by using the first audio stream.

4. The method according to claim 3, wherein the switching indication is carried in a first video data packet, and the first video data packet is a last video data packet in a plurality of video data packets for carrying the first video data; or
the switching indication is carried in a first audio data packet, and the first audio data packet is an audio data packet sent by the first terminal device when the first terminal device determines that the communication connection is abnormal; or
the switching indication is carried in indication signaling sent by the first terminal device.

5. The method according to any one of claims 1 to 4, wherein the method further comprises:
receiving a first request from the first terminal device, wherein the first request is used to request to establish the communication connection; and
sending a first response to the first terminal device, wherein the first response carries a switching capability identifier, the switching capability identifier indicates that the media server supports switching from a first driving mode to a second driving mode, the first driving mode is driving the digital human model by using video data, and the second driving mode is driving the digital human model by using an audio stream.

6. The method according to any one of claims 1 to 5, wherein a background part of a plurality of frames of images comprised in the second video stream is a background part of a last frame of image comprised in the first video stream; or
a background part of a plurality of frames of images comprised in the second video stream is a preset background; or
a plurality of frames of images comprised in the second video do not comprise a background part.

7. The method according to any one of claims 1 to 6, wherein the method further comprises:
when the communication connection to the first terminal device is normal, switching from driving the digital human model by using the first audio stream to driving the digital human model by using second video data, wherein the second video data is from the first terminal device, and the second video data is generated by the first terminal device by capturing an expression and an action of the user; and
sending a third video stream and the first audio stream to the second terminal device, wherein the third video stream is generated by driving the digital human model based on the second video data.

8. The method according to any one of claims 1 to 7, wherein the media server is located in an IP multimedia subsystem IMS; or the media server is located in an over the top OTT system.

9. A digital human communication method, applied to a first terminal device, wherein the method comprises:
sending first video data and a first audio stream to a media server, wherein the first video data is generated by capturing an expression and an action of a user of the first terminal device, the first audio stream is generated by capturing a voice of the user, and the first video data is used by the media server to drive a digital human model to obtain a first video stream for communicating with a second terminal device; and
when a communication connection to the media server is abnormal, or video interference exists in any frame of image comprised in the first video data, stopping sending the first video data to the media server, wherein when the first video data is not sent, the first audio stream is used by the media server to drive the digital human model to obtain a second video stream for communicating with the second terminal device, wherein
the video interference represents that a quantity of profile pictures comprised in the any frame of image is not unique.

10. The method according to claim 9, wherein the method further comprises:
when it is determined that the communication connection to the media server is abnormal, or it is determined that the video interference exists in the any frame of image, sending a switching indication to the media server, wherein the switching indication indicates the media server to switch from driving the digital human model by using the first video data to driving the digital human model by using the first audio stream.

11. The method according to claim 10, wherein determining that the communication connection to the media server is abnormal comprises:
determining that a sending rate of a plurality of video data packets for carrying the first video data is less than an encoding bit rate of the first video data, and a difference between the encoding bit rate and the sending rate is greater than a specified threshold; or
determining that a packet loss rate of a plurality of video data packets for carrying the first video data is greater than a packet loss rate threshold.

12. The method according to claim 10 or 11, wherein the switching indication is an indication parameter comprised in a packet header of a first video data packet; or the switching indication is an indication parameter comprised in a packet header of a first audio data packet; or the switching indication is information carried in indication signaling sent by the first terminal device, wherein
the first video data packet is a last video data packet in the plurality of video data packets for carrying the first video data, and the first audio data packet is an audio data packet sent when it is determined that the communication connection is abnormal or it is determined that the video interference exists in the any frame of image.

13. The method according to any one of claims 9 to 12, wherein the method further comprises:
sending a first request to the media server, wherein the first request is used to request to establish the communication connection; and
receiving a first response sent by the media server, wherein the first response carries a switching capability identifier, the switching capability identifier indicates that the media server supports switching from a first driving mode to a second driving mode, the first driving mode is driving the digital human model by using video data, and the second driving mode is driving the digital human model by using an audio stream.

14. The method according to any one of claims 9 to 13, wherein a background part of a plurality of frames of images comprised in the second video stream is a background part of a last frame of image comprised in the first video stream; or
a background part of a plurality of frames of images comprised in the second video stream is a preset background; or
a plurality of frames of images comprised in the second video do not comprise a background part.

15. The method according to any one of claims 9 to 14, wherein the method further comprises:
when the communication connection to the media server is normal, and no video interference exists in any frame of image comprised in the second video data generated by capturing an expression and an action of the user, sending the second video data and the first audio stream to the media server, wherein the second video data is used by the media server to drive the digital human model to obtain a third video stream for communicating with the second terminal device.

16. A digital human communication apparatus, wherein the apparatus is a media server, or the apparatus is used in the media server, and the apparatus comprises:
a communication unit, configured to receive first video data and a first audio stream from a first terminal device, wherein the first video data is generated by the first terminal device by capturing an expression and an action of a user of the first terminal device, and the first audio stream is generated by the first terminal device by capturing a voice of the user, wherein
the communication unit is further configured to send a first video stream and the first audio stream to a second terminal device, wherein the first video stream is generated by driving a digital human model based on the first video data; and
a processing unit, configured to: when a communication connection to the first terminal device is abnormal, switch from driving the digital human model by using the first video data to driving the digital human model by using the first audio stream, wherein
the communication unit is further configured to send a second video stream and the first audio stream to the second terminal device, wherein the second video stream is generated by driving the digital human model based on the first audio stream.

17. The apparatus according to claim 16, wherein the processing unit is further configured to determine that the communication connection to the first terminal device is abnormal, and is specifically configured to:
determine that a frame loss occurs in the first video data; or
determine that a receiving rate of a plurality of image frames carrying the first video data is less than a speed threshold.

18. The apparatus according to claim 16, wherein the communication unit is further configured to:
when the communication connection to the first terminal device is abnormal, receive a switching indication sent by the first terminal device, wherein the switching indication indicates the media server to switch from driving the digital human model by using the first video data to driving the digital human model by using the first audio stream.

19. The apparatus according to claim 18, wherein the switching indication is carried in a first video data packet, and the first video data packet is a last video data packet in a plurality of video data packets for carrying the first video data; or
the switching indication is carried in a first audio data packet, and the first audio data packet is an audio data packet sent by the first terminal device when the first terminal device determines that the communication connection is abnormal; or
the switching indication is carried in indication signaling sent by the first terminal device.

20. The apparatus according to any one of claims 16 to 19, wherein the communication unit is further configured to:
receive a first request from the first terminal device, wherein the first request is used to request to establish the communication connection; and
send a first response to the first terminal device, wherein the first response carries a switching capability identifier, the switching capability identifier indicates that the media server supports switching from a first driving mode to a second driving mode, the first driving mode is driving the digital human model by using video data, and the second driving mode is driving the digital human model by using an audio stream.

21. The apparatus according to any one of claims 16 to 20, wherein a background part of a plurality of frames of images comprised in the second video stream is a background part of a last frame of image comprised in the first video stream; or
a background part of a plurality of frames of images comprised in the second video stream is a preset background; or
a plurality of frames of images comprised in the second video do not comprise a background part.

22. The apparatus according to any one of claims 16 to 21, wherein the processing unit is further configured to: when the communication connection to the first terminal device is normal, switch from driving the digital human model by using the first audio stream to driving the digital human model by using second video data, wherein the second video data is from the first terminal device, and the second video data is generated by the first terminal device by capturing an expression and an action of the user; and
the communication unit is further configured to send a third video stream and the first audio stream to the second terminal device, wherein the third video stream is generated by driving the digital human model based on the second video data.

23. The apparatus according to any one of claims 16 to 22, wherein the media server is located in an IP multimedia subsystem IMS; or the media server is located in an over the top OTT system.

24. A digital human communication apparatus, wherein the apparatus is a first terminal device, or the apparatus is used in the first terminal device, and the apparatus comprises:
a communication unit, configured to send first video data and a first audio stream to a media server, wherein the first video data is generated by capturing an expression and an action of a user of the first terminal device, the first audio stream is generated by capturing a voice of the user, and the first video data is used by the media server to drive a digital human model to obtain a first video stream for communicating with a second terminal device; and
a processing unit, configured to: when a communication connection to the media server is abnormal, or video interference exists in any frame of image comprised in the first video data, indicate the communication unit to stop sending the first video data to the media server, wherein when the first video data is not sent, the first audio stream is used by the media server to drive the digital human model to obtain a second video stream for communicating with the second terminal device, wherein
the video interference represents that a quantity of profile pictures comprised in the any frame of image is not unique.

25. The apparatus according to claim 24, wherein the communication unit is further configured to:
when it is determined that the communication connection to the media server is abnormal, or it is determined that the video interference exists in the any frame of image, send a switching indication to the media server, wherein the switching indication indicates the media server to switch from driving the digital human model by using the first video data to driving the digital human model by using the first audio stream.

26. The apparatus according to claim 25, wherein the processing unit is specifically configured to:
determining that a sending rate of a plurality of video data packets for carrying the first video data is less than an encoding bit rate of the first video data, and a difference between the encoding bit rate and the sending rate is greater than a specified threshold; or
determining that a packet loss rate of a plurality of video data packets for carrying the first video data is greater than a packet loss rate threshold.

27. The apparatus according to claim 25 or 26, wherein the switching indication is an indication parameter comprised in a packet header of a first video data packet; or the switching indication is an indication parameter comprised in a packet header of a first audio data packet; or the switching indication is information carried in indication signaling sent by the first terminal device, wherein
the first video data packet is a last video data packet in the plurality of video data packets for carrying the first video data, and the first audio data packet is an audio data packet sent when it is determined that the communication connection is abnormal or it is determined that the video interference exists in the any frame of image.

28. The apparatus according to any one of claims 24 to 27, wherein the communication unit is further configured to:
send a first request to the media server, wherein the first request is used to request to establish the communication connection; and
receive a first response sent by the media server, wherein the first response carries a switching capability identifier, the switching capability identifier indicates that the media server supports switching from a first driving mode to a second driving mode, the first driving mode is driving the digital human model by using video data, and the second driving mode is driving the digital human model by using an audio stream.

29. The apparatus according to any one of claims 24 to 28, wherein a background part of a plurality of frames of images comprised in the second video stream is a background part of a last frame of image comprised in the first video stream; or
a background part of a plurality of frames of images comprised in the second video stream is a preset background; or
a plurality of frames of images comprised in the second video do not comprise a background part.

30. The apparatus according to any one of claims 24 to 28, wherein the communication unit is further configured to:
when the communication connection to the media server is normal, and no video interference exists in any frame of image comprised in the second video data generated by capturing an expression and an action of the user, send the second video data and the first audio stream to the media server, wherein the second video data is used by the media server to drive the digital human model to obtain a third video stream for communicating with the second terminal device.

31. A digital human communication apparatus, comprising a processor and a memory, wherein
the memory is configured to store a program; and
the processor is configured to execute the program stored in the memory, so that the apparatus implements the method according to any one of claims 1 to 8 or claims 9 to 15.

32. A computer-readable storage medium, wherein the computer-readable storage medium stores computer-executable instructions, and when the computer-executable instructions are invoked by an electronic apparatus, the electronic apparatus is enabled to perform the method according to any one of claims 1 to 8 or claims 9 to 15.

33. A chip system, comprising a communication interface and a processor, wherein
the communication interface is configured to input and/or output signaling or data; and
the processor is configured to execute a computer-executable program, so that a device on which the chip system is installed performs the method according to any one of claims 1 to 8 or claims 9 to 15.

34. A computer program product, wherein when the computer program product runs on a computer, the computer is enabled to perform the method according to any one of claims 1 to 8 or claims 9 to 15.
